(19) Europäisches Patentamt / European Patent Office / Office européen des brevets

(11) **EP 3 860 747 B1**

(12) **EUROPEAN PATENT SPECIFICATION**

(45) Date of publication and mention
of the grant of the patent:
**27.12.2023 Bulletin 2023/52**

(21) Application number: **19816484.0**

(22) Date of filing: **04.10.2019**

(51) International Patent Classification (IPC):
**B01D 67/00** (2006.01)     **B01D 69/02** (2006.01)
**B01D 69/14** (2006.01)

(52) Cooperative Patent Classification (CPC):
**B01D 69/148; B01D 67/0016; B01D 67/00165;
B01D 69/02; B01D 69/14111;** B01D 71/021;
B01D 71/34; B01D 2325/38; B01D 2325/48

(86) International application number:
**PCT/ZA2019/050063**

(87) International publication number:
**WO 2020/073064 (09.04.2020 Gazette 2020/15)**

(54) **MEMBRANES FOR MEMBRANE DISTILLATION DESALINATION TECHNOLOGY**

MEMBRANEN FÜR DIE MEMBRANDESTILLATIONSENTSALZUNGSTECHNIK

MEMBRANES POUR TECHNOLOGIE DE DESSALEMENT PAR DISTILLATION MEMBRANAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2018 ZA 201806582**

(43) Date of publication of application:
**11.08.2021 Bulletin 2021/32**

(73) Proprietor: **University of South Africa**
**0002 Pretoria (ZA)**

(72) Inventors:
• **MAPUNDA, Edgar**
**Msangani-Kibaha, Coast Region (TZ)**
• **MSAGATI, Titus**
**Buccleugh, Sandton 2090 (ZA)**
• **MAMBA, Bhekie**
**Little Falls, Roodepoort 1724 (ZA)**

(74) Representative: **Baur & Weber Patentanwälte**
**PartG mbB**
**Rosengasse 13**
**89073 Ulm (DE)**

(56) References cited:
**CN-A- 106 914 148     CN-A- 106 914 149
CN-A- 108 097 223**

• **MAPUNDA EDGAR C ET AL: "Carbon nanotube
embedded PVDF membranes: Effect of solvent
composition on the structural morphology for
membrane distillation", PHYSICS AND
CHEMISTRY OF THE EARTH, PARTS A/B/C,
PERGAMON, AMSTERDAM, NL, vol. 100, 12
January 2017 (2017-01-12), pages 135-142,
XP085191028, ISSN: 1474-7065, DOI:
10.1016/J.PCE.2017.01.003**

## Description

## Field of the Invention

The invention relates to membranes for membrane distillation desalination technology. In particular, this invention is related to highly hydrophobic multi-walled carbon nanotube blended polyvinylidene fluoride (MWCNTs/PVDF) membranes. The invention also extends to the preparation process of the MWCNTs/PVDF membranes and their application in industry. The invented membranes have highly hydrophobic surface and sponge-like internal structures with interconnected crystalline nodules.

## Background to the Invention

Membrane distillation (MD) is a separation technology that involves transport of water vapour via a microporous hydrophobic membrane where the driving force is the partial vapour pressure gradient generated by temperature differences between the membrane sides. The pressure gradient enables water vapours coming from warmer feed solution to migrate through the hydrophobic membrane pores to the cooler permeate side leaving behind non-volatile dissolved solutes.

Membrane distillation has shown many attractive features to the capacity of addressing the challenges that are currently facing conventional technologies for desalination such as reverse osmosis (RO), multi-stage flash distillation (MSF) and multi-effect distillation (MED). However, up to the present MD technology for desalination is not available for large commercial application. One of the major reasons being lack of specially designed membranes for MD application. Currently, MD research works, and pilot plants utilize membranes adopted from ultrafiltration and microfiltration separation technologies, which produce low water flux and are prone to fouling/scaling. It is well agreed among scientific community that new membranes need to be designed and tailor made for application in MD processes.

Membrane development approach that involve coupling membrane science and nanotechnology have attracted attention among scientist as viable direction towards solving the mystery of MD membranes. Among the different nanomaterials, carbon nanotubes have a greater potential of producing unique membranes when blended within the membrane polymer matrix.

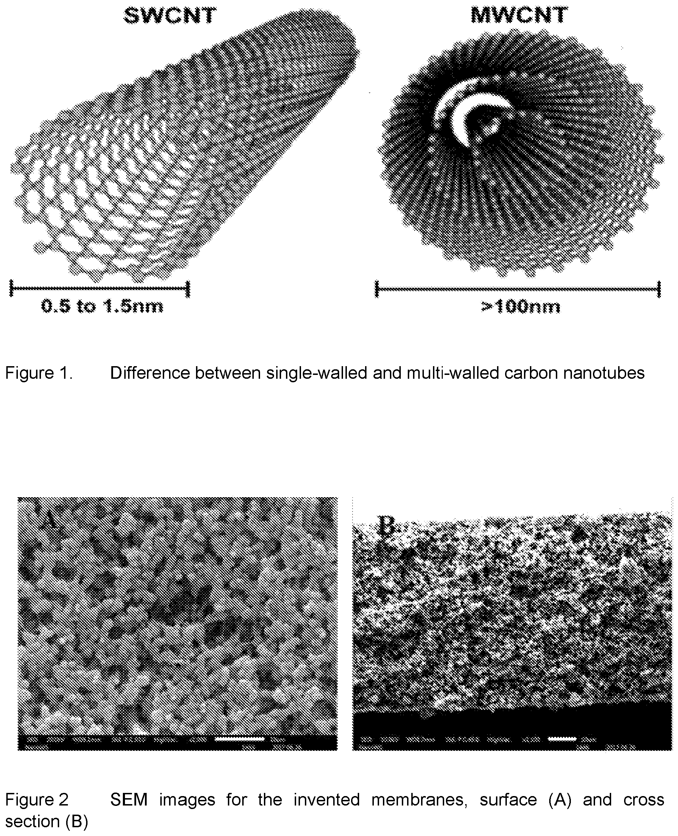

Carbon nanotubes (CNTs) are allotropic forms of carbon which consist of cylindrical sheets of graphite. Their appearance is like that of a rolled-up tube of fencing wire. There are two types of CNTs, single-walled (SWCNTs) and multi-walled (MWCNTs). The SWCNTs consists of cylindrical shape made up of one graphene shell. On the contrary, MWCNTs is made up of multiple cylindrical layers of graphene sheets. Figure 1 shows the difference between single-walled and multi-walled carbon nanotubes (Source: https://www.quora.com/What-is-the-difference-between-single-walled-and-multi-walled-carbon-nanotubes, Accessed on the 05th October 2017).

Although CNTs have extensively been studied in the past few decades, its application in membranes water treatment, particularly desalination is still a concept. CNTs have several intrinsic properties, which make them attractive in water treatment, membrane technology in particular. The smooth and hydrophobic surfaces in the outside and inner core of their hollow tube, allows frictionless movement of water molecules with high flow rate. CNTs have the ability to prevent microbial growth on the membrane surface due to the inherent microbial activity they possess and hence can significantly prevent biofouling in membrane desalination activities. CNTs have also been reported to improve mechanical strength when blended in membranes.

Despite the promising potentials of CNTs in membrane desalination application, the difficulty in properly aligning CNTs on the thin surface layer of membranes still remain a challenge. Significant amount of work on incorporation of CNTs in membranes for water treatment is available in the literature for other membrane technologies such as reverse osmosis, ultrafiltration (UF), nanofiltration (NF) and microfiltration (MF). Less information is available on the application of CNT in membranes for MD application. Dum6e et al., J. Memb. Sci. 351 (2010) 36-43 prepared CNT bulky paper membranes with surface contact angle as high as 113 °, high porosity and relatively lower thermal conductivity (2.7kW/m2 h) for direct contact membrane distillation (DCMD) desalination. However, the bulky paper membranes were reported to undergo delamination and cracking when applied in DCMD desalination. CNTs have also been reported to be immobilized into the pores of polypropylene hollow-fiber membranes using PVDF solution as gluing material (Gethard et al., ACS Appl. Mater. Interfaces 3, (2011) 110-114). These membranes were reported to have superior performance in MD application compared to their counterpart. However, the use of PVDF as a gluing solution lead to the reduction of membrane pore size as well as porosity for the CNTs immobilized membranes. Silva et al., Desalination, 357, (2015) 233-245, prepared MWCNTs blended PVDF membrane via phase inversion method for MD application. They found that PVDF membranes blended with 0.2 % pristine MWCNTs were better performing in DCMD desalination than those blended with functionalized MWCNTs or commercially available membranes. Despite high membrane performance observed in DCMD, the MWCNTs blended membranes had lower surface hydrophobicity (contact angle < 95 °) compared to that of the reported commercial membrane (119 °). Other MWCNTs blended PVDF membranes comprising contact angles of about 98° are known from Mapunda et al., Physics and Chemistry of the Earth, vol. 100 (2017) 135-142. Still more work needed to be done to uncover the potentials CNTs can offer in the area of membranes for MD application.

## Summary of the Invention

In the present invention, the advantages introduced using mixed solvent and dual coagulation bath plus the potential benefits offered by carbon nanotubes were employed to prepare composite PVDF membranes with unique properties suited for application in MD processes which addresses the shortcomings of the previously fabricated CNT composite membranes.

According to the invention, multi-walled carbon nanotube blended polyvinylidene fluoride (MWCNTs/PVDF) membranes for MD treatment of saline water are prepared as defined in the claims, using non-solvent induced phase separation (NIPS) methods. The synthesis procedure involves mixing two solvents with different solubility parameters and the use of dual coagulation bath system to control the formation of membrane pore structures and enhance surface hydrophobicity. By combining the two synthesis approaches in the presence of MWCNTs, blended PVDF membranes are produced for application in MD processes.

The method may include dispersing pristine MWCNTs (0.2 wt %) in an optimized mixture of triethyl phosphate (TEP) and N, N-dimethylacetamide (DMAC) of 1:1 mass ratio thereby producing 81 wt % of a final dope solution.

The MWCNTs dispersion may take place by sonicating the solution for not less than 1 hour.

4 wt% ethylene glycol (EG), a pore forming agent, may be added into the mixture followed by 15 wt % of PVDF.

The mixture may be mechanically stirred at 60 - 70 °C for up to 24 hours.

The dope solution may be left to cool at room temperature for up to 24 hours.

The prepared dope solution may be cast onto thin membrane films on a glass plate using casting knife at a thickness from 100 $\mu$m to 600 $\mu$m, typically 300 $\mu$m.

The glass plate with a nascent membrane on top may first be immersed in a coagulation bath containing 40 wt% water and 60 wt% mixture of TEP and DMAC (mass ratio 2:3) for a maximum of 30 seconds.

The glass plate with its membrane may then be dipped in a second coagulation bath containing pure water to complete the precipitation process.

Precipitated membranes may be soaked in deionized water for up to 24 hours to completely remove the solvents.

The membranes may then be dried in air at room temperature ready for characterization and application.

## Description of an Embodiment of the Invention

The invented membranes generally as described above were characterized and tested for their performance in DCMD desalination of seawater. The present invented MWCNTs/PVDF membranes were found to have the following inherent properties; Morphologically, the invented membranes were microporous with a rough membrane surface which is composed of spherical palate like nodules that are interconnected by a network of fibres (Fig. 2A). Figure 2B indicated that the invented MWCNTs/PVDF membranes are symmetric and that the internal cross-section structure is composed of sponge-like structures. These features are unique and are beneficial when it comes to applications in MD processes. The surface of the invented membranes was highly hydrophobic having average water drop contact angle of 135 $\pm$ 1.1 °. The membranes had mean pore size of 1.16 $\pm$ 0.01 $\mu$m and average porosity of 66.0 $\pm$ 1.5 $\mu$m. Liquid entry pressure for the membranes was found to be 250 kPa.

Figure 2 A & B shows scanning electron microscope (SEM) images for the invented membranes, surface (A) and cross section (B).

The invented MWCNTs/PVDF membranes were tested for their performance in seawater desalination using a self-designed and fabricated laboratory DCMD unit and the results compared with that obtained in a similar way for a commercially obtained PVDF membrane and PVDF membranes synthesised without MWCNTs. Results indicated that, the present invented MWCNTs/PVDF membranes had the highest average water flux (34.0 $\pm$ 2.6 L/m$^2$h) followed by PVDF membranes synthesized without MWCNTs (27.9 $\pm$ 0.3 L/m$^2$h). Under the same DCMD operation conditions, commercial PVDF membranes had the least average permeate flux (26.6 $\pm$ 0.2 L/m$^2$h). Salt rejection for all membranes were high (above 99.99 %) with seawater. The high-water flux obtained from MWCNTs/PVDF membranes was contributed by the presence of MWCNTs which enhanced water vapour flow across the membrane by providing extra pathways as well as reducing friction forces on their walls.

The present invented MWCNTs/PVDF membranes have proved to be more efficient in terms of water flux in MD application compared to PVDF membranes without carbon nanotubes. The modified method of synthesizing MWCNTs/PVDF membranes have resulted into better performing membranes with respect to the commercially obtained membranes.

The unique features of the invented MWCNTs/PVDF membranes lies on the composition, morphology and methods in which the membranes were synthesized. The invented membranes are composed of PVDF polymer blended with pristine MWCNTs. The presence of MWCNTs in the PVDF membrane matrix provide extra pathways for water molecule but also, provide less flow resistance (less friction force) since the walls of MWCNTs offer friction free flow to water molecules.

The morphological properties of the invented MWCNTs/PVDF membranes are unique and are tailored to application of the membranes. The surface morphology of the invented membranes is composed of spherical-like palates interconnected with a network of fibres, which made the surfaces to look rough (Fig 2A). This roughness of the membrane surface is responsible for the high contact angle between membrane surface and water drops recorded for these membranes (Av. 135 °). On the other hand, the entire membrane cross section is made up of sponge-like structures. The sponge-like structure of the membranes is responsible for the moderate membrane porosities and offers more resistant to wetting during MD application.

The method of synthesis of the invented MWCNTs/PVDF membrane was also unique since it combined several synthesis approaches into one. The membranes were prepared using a common non-solvent induced phase separation technique, however, a mixture of solvent (triethyl phosphate (TEP) and N, N-dimethylacetamide (DMAC)) (mass ratio 1:1) was used instead of pure solvent. Also, dual coagulation bath system was used where the membrane's precipitation rate was controlled by immersing the nascent membrane in a bath containing a mixture of TEP, DMAC and water. Later, a complete membrane precipitation was achieved by immersing the pre-conditioned nascent membrane into a bath containing pure water as a non-solvent. This combination of synthesis steps has not been reported before for PVDF membranes containing MWCNTs and thus makes it unique for this invention.

The invented membranes have shown to be suitable for application in membrane distillation desalination and related industry, where they provide higher water fluxes than currently available commercial PVDF membranes. Furthermore, the invented membranes have proved to be more resistant to fouling/scaling hence they can be used to treat saline water of very high concentration of dissolved solutes. As a result, the invented membranes can provide higher water recoveries than that obtained using commercial PVDF membranes. Meanwhile, salt rejections offered by the invented membranes are high even at a very high concentration of dissolved solutes in the sources/feed water.

The potential application of the invented MWCNTs/PVDF membranes is in the treatment of saline water sources to obtain pure drinking water by using membrane distillation technology. The membranes can also be used in pharmaceuticals for concentration of non -volatile drugs. The MWCNTs/PVDF membranes have additional application potential in fruit juice and dairy industries for making concentrates of their products.

In an experiment, performance in desalination by membrane distillation of multi-walled carbon nanotubes-polyvinylidene fluoride membranes was tested. The DCMD unit described here below was used to carry out membrane distillation investigation of the desalination performance of synthesized membranes.

Membrane preparation

Multi-walled carbon nanotube embedded PVDF membranes were prepared by non-solvent induced phase separation (NIPS) methods using DMAC and TEP solvent mixtures at a composition of 1:1 ratio. Optimal loading of MWCNT was used where 0.2 wt % of pristine MWCNT was dispersed in appropriate amount of DMAC and sonicated for an hour. An appropriate amount of TEP was then added into the dispersed MWCNT and sonicated for further 30 minutes. 15 wt % of PVDF polymer and 4 wt % of pore forming agent (ethylene glycol) were dissolved in the above mixture and mechanically stirred for 24 hours to ensure complete dissolution. The dope solution was allowed to cool at room temperature for 24 hours to remove air bubbles. The dope solution was cast into thin films of membranes on a smooth glass plate using a casting knife (Elcometer 3580/7) at a thickness of 300 $\mu$m. The glass plate with a nascent membrane thin film was first immersed in a coagulation bath made up of 40 % water and 60 % mixture of TEP/DMAC (2:3) for a maximum of 30 seconds. Thereafter the nascent membrane was transferred to a second coagulation bath containing pure water to complete the precipitation process. Fully precipitated membranes were soaked in deionized water for 24 hours to ensure that all solvents were completely removed. The membranes were then dried on air at room temperature, characterized and tested for desalination performance in MD. Another set of membranes that contained PVDF without MWCNTs (neat PVDF) were also synthesized for comparison purpose.

Determination of membrane characteristics

The dried synthesized membranes were analyzed using a range of characterization techniques to determine their physicochemical properties. An analytical scanning electron microscope (SEM), a JOEL JSM-6010PLUS/LA, was used for the analysis of surface and cross-sectional morphologies of the membranes. Gold sputtering was used for coating membrane samples and the scanning was performed at appropriate accelerating voltage and magnification.

Contact angle (CA) between membrane surface and water was measured using a Kruss DSA 30E instrument equipped with a video capture system. Sessile drop method was used where 2 $\mu$L drops of deionized water were placed on the surface of membrane samples using an automated syringe and the contact angle between water drop and membrane surface was calculated using advanced software in a computer used to control the instrument. A minimum of ten different sections on each membrane sample were analyzed where mean values were taken as the contact angle for the respective membranes. All the measurements were conducted at room temperature.

Membrane mechanical strength was analyzed on an Anton Paar SAXSpace instrument which was coupled with a TS600 tensile stage of 600 N load cell. Three samples from each membrane were analyzed at a 2.0 mm/min velocity and the mean value was considered as the strength of a membrane.

Membrane pore size and pore size distribution were determined by a capillary flow porometry method using a Quantachrome Instruments Porometer 3Gz. The membrane sample was cut into a required size and placed into sample holder chamber. The sample was then wetted using Porofil wetting liquid and the sample chamber closed air tightly. Nitrogen gas was pressurized across the membrane and the wetting liquid forced to extrude on the other side of the membrane while opening membrane pores for the gas to flow. Large membrane pores opened first, and small pores opened last. Gas pressure and flow rate across the membrane was detected and recorded by the instrument software (3GWin V2 Porometer software) and used to determine pore size distribution of the membrane samples.

Water liquid entry pressure ($LEP_w$), was also determined using the Quantachrome Instruments Porometer 3Gz equipped with liquid permeability accessories. Membrane sample was placed in the sample holder and deionized water was pressurized over it. A single pressure point mode was used where a target pressure was set and allowed to hold for 10 minutes. The target pressure was increased at intervals of 10 kPa up to a point where water flow across the membrane was detected. The pressure at which water flow was observed was considered as the $LEP_w$ for the membrane.

Description DCMD desalination unit

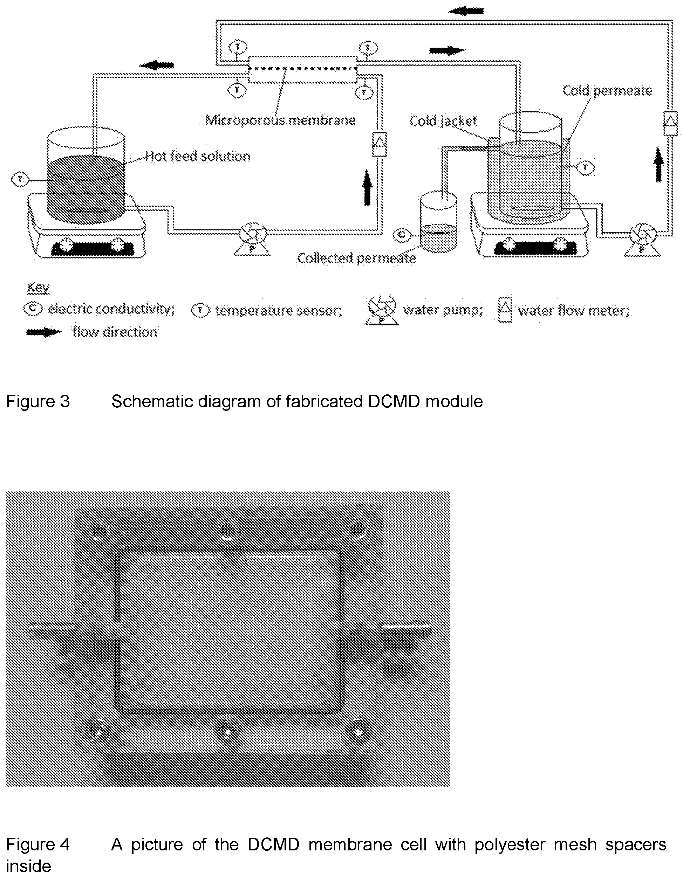

A schematic diagram for the designed and fabricated DCMD module is presented in Figure 3. The module consists of membrane cell, 1 L feed solution reservoir with heating element, 0.55 L distillate reservoir connected to chiller, a double headed peristaltic pump, temperature sensors, conductivity meters, water flow meters and connecting pipes.

The membrane cell was rectangular and was made of acrylic plastics (Perspex) to reduce heat loss to the environment. Flow channels was engraved in two acrylic blocks to make two half cells, feed flow channel half-cell and distillate flow channel half-cell. The two blocks were designed to be joined and tighten by screws while holding a flat sheet membrane in between which separated the feed and permeate flows into the cell. Each channel was 1.5 mm deep, 50 mm wide and 70 mm long to make a total membrane active surface area of 0.0035 $m^2$ (Figure 4 - which is a picture of the DCMD membrane cell with polyester mesh spacers inside). A polyester mesh spacer was installed on each membrane half-cell to promote turbulence and ensure uniform flow distribution. Feed solution was circulated from a 1 L reservoir through the membrane cell and back to reservoir with the aid of a peristaltic pump. The feed reservoir was placed on heating element. Deionised water as coolant was circulated by means of a peristaltic pump from a distillate reservoir to the membrane cell and back to reservoir. The distillate reservoir was made of a double walled (jacketed) cylinder with two separate water circulation channels. The outer circulation was connected to the chiller to provide cooling effect. The inner vessel was the actual distillate tank connected with an overflowing channel to allow excess distillate to overflow into a collection container. Polypropylene pipes were used to connect the feed and the permeate circulation channels. All the pipes were covered with insulating foam to prevent heat losses to the surroundings. Temperature sensors were installed at the inlet and outlet of each circulation channel to the membrane cell. One water flow meter was installed in each, feed and permeate circulation loop between the pump and the inlet to the membrane cell. An offline determination of solutions' electrical conductivities was done using a conductivity meter. However, a provision was made on each circulation loop for online electrical conductivity measurement when compatible conductivity electrodes become available.

DCMD module operation

The DCMD module is made up of two independent water circulation loops, the raw water (feed) loop and the treated water (permeate) loop. Within the membrane cell the two circulation loops are separated by a microporous hydrophobic membrane which prevents liquid water to cross the membrane from one side to the other but allows water vapour to do so. In the fabricated DCMD module, a hydrophobic membrane is first installed in the membrane cell and the cell connected to the respective circulation loops. The membrane is installed in such a way the membrane active side faces the raw water when circulated into the cell. The raw water is filled in a feed reservoir and is heated to a desired elevated temperature. Deionized water (clean water) is filled in the treated water tank which is connected to a cooling device. The deionized water in the permeate tank is cooled to a lower temperature which causes condensation of water vapour once extracted from the raw water. Once temperatures of interest are reached in the feed tank and permeate tank, circulation pumps are switched on and the pumping speed is regulated to that of a required flow rate. Water flow meters installed in each circulation loop help to determine the flow rates of water circulated across the membrane in the membrane cell. Care is taken to make sure that no air bubbles are trapped in the membrane cell. After water circulation starts, the water level in the permeate tank decreases below the overflow arm. Additional deionized water is added into the permeate tank to a level where water start to flow through the overflowing arm. The overflow of deionized water in the permeate tank will stop after the system has stabilized. The process is then left to equilibrate for about 20 - 60 minutes depending on the feed water inlet temperature used. The higher the temperature the faster is the system equilibration due to increased MD driving force. During this time, the first drops of permeate which is a result of distillation will be observed in the overflow channel of the permeate tank. The permeate is then collected in a separate container from the overflow channel. The analyst starts recoding time at the beginning of the permeate collection to determine the rate of DCMD permeation (permeate flux) at a given period. Flux permeation is subject to several factors both operational and membrane based. Different membranes will have different rate of permeate production in similar operation condition due to the differences in membrane properties. Likewise, different operation conditions such as feed inlet temperature, feed solution concentration, flow rate and overall change in temperature across the membrane will result into different permeate flux for the same membrane.

Salt rejection efficiency in the DCMD desalination process is determined by measurement of electric conductivities of raw water before the beginning of the distillation process. Also, the conductivities are measured for deionized water before the process starts and for the collected permeate after the experiment.

Determination of membrane performance in DCMD desalination

The performance of synthesized MWCNTs/PVDF membranes in membrane distillation process was evaluated by carrying out DCMD experiments at different feed inlet temperatures using the described fabricated DCMD set-up. The feed inlet temperatures were varied from 40 to 70 °C and circulated at feed flow rate of 24 L/h. Permeate inlet temperature was maintained at 20 °C and a flow rate of 24 L/h throughout the experiments. Each experiment was allowed to run for at least 6 hours while water vapour flux and salt rejection measurement were taken after every 2 hours. After setting up each experiment, it was allowed to run and equilibrate before data recording was started. Initial and final electrical conductivities (EC) for the feed and permeate were determined using YSI Professional Plus field meter whereas volumes of collected permeate were determined by a measuring cylinder. Water vapour flux and salt rejections were later determined using Equations 1 and 2, where $Cf$ is the concentration of feed and $Cp$ is the concentration of permeate. Similar MD performance experiments were conducted for neat-PVDF synthesized membranes as well as commercially obtained PVDF membranes ((HVHP 29325) and the results were compared.

## Equation 1

$$Flux = \frac{Volume\ of\ permeate\ collected\ (L)}{Membrane\ area\ (m^2) \times time\ (h)}$$

## Equation 2

$$\mathrm{Re}\,jection = \left\{1 - \frac{Cp}{Cf}\right\} \times 100$$

Physical properties of the membranes

The results for membrane characterization experiments for contact angle, mean pore size, porosity, thickness and liquid entry pressure are presented in Table 1. Average contact angles between membrane surface and water drops of 135° were recorded for the synthesized membranes with and without MWCNTs. The higher wetting resistance of these membranes has resulted from removal of surface skin layer on the membranes, a role played by the dual coagulation bath system used.

Table 1 Characteristics of membranes used in the study

| Membrane ID | Membranes' physical properties | | | | |
|---|---|---|---|---|---|
| | CA (°) | Mean pore size ($\mu$m) | Porosity (%) | Thickness ($\mu$m) | LEP (kPa) |
| MWCNTs/PVDF | $135 \pm 1.1$ | $1.16 \pm 0.01$ | $66.0 \pm 1.5$ | $60.0 \pm 2.7$ | 250 |
| Neat-PVDF | $135 \pm 1.5$ | $0.74 \pm 0.02$ | $66.7 \pm 1.2$ | $82.8 \pm 1.9$ | 320 |
| Comm. PVDF | $123 \pm 1.6$ | $0.89 \pm 0.01$ | $54.4 \pm 2.1$ | $91.6 \pm 0.5$ | 110 |

Membrane performance

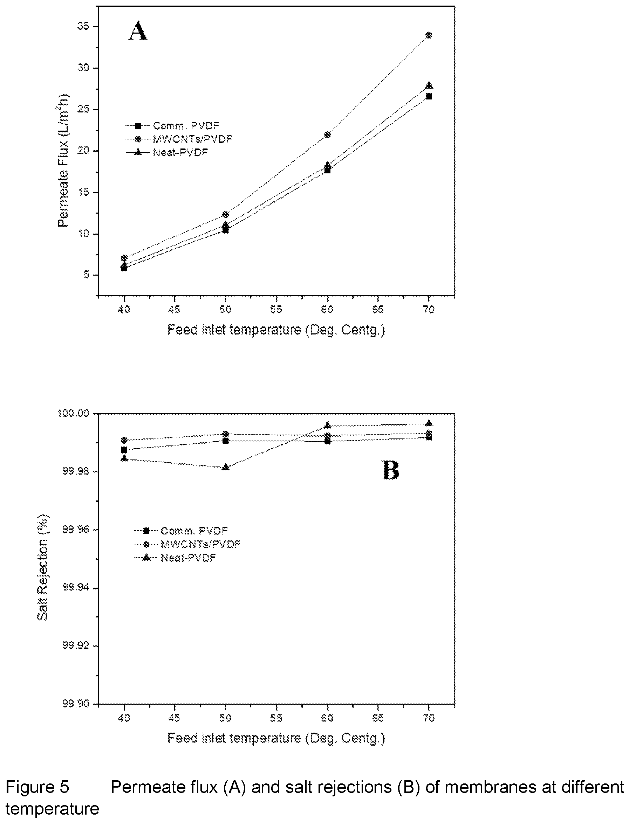

Results obtained from MD performance experiments are as indicated in Figure 5A. It was found that MWCNTs/PVDF membranes had the highest permeate flux almost at all feed inlet temperatures investigated. For example, at feed inlet temperature of 70 °C permeate flux from MWCNTs/PVDF membranes was 22 % and 27.8 % higher than that of neat-PVDF and commercial PVDF membranes respectively. The high permeate flux of MWCNTs/PVDF relative to neat-PVDF and commercial PVDF membranes is due to the presence of MWCNTs which facilitates water vapour transport by providing extra pathways and or reducing flow resistance on the surface of carbon nanotubes (Gethard and Mitra, Analyst 136, (2011) 2643-8). Increasing feed inlet temperature from 40 °C to 70 °C was found to induce an increase of permeate flux significantly in all the three membrane types used. A maximum flux increment of 4.86 times was recorded for MWCNTs/PVDF membranes when feed inlet temperature was increased from 40 to 70 °C. The maximum permeate flux recorded at 70 °C was 34.0 L/m$^2$h. The increase in permeates flux with temperature was due to increased water vapour driving force. Water vapour pressure which is the driving force of MD increases when feed inlet temperature is increased. This is because, at higher temperature the kinetic energy of water molecule becomes high which lead to higher rates of evaporation at the liquid-membrane interface.

On the other hand, all membranes were observed to have salt rejections of non-volatile dissolved solutes of higher than 99.98 % across the entire feed inlet temperature range investigated (Fig. 5B). This shows that the membranes resistance to wetting was not significantly affected by temperature changes on the feed.

**Claims**

1.    A method of producing multi-walled carbon nanotube blended polyvinylidene fluoride (MWCNTs/PVDF) membranes for membrane distillation (MD) treatment of saline water using non-solvent induced phase separation (NIPS), said method including mixing two solvents with different solubility parameters, said solvents being triethyl phosphate (TEP) and N, N-dimethylacetamide (DMAC), mixed in a 1:1 mass ratio, and the use of a dual coagulation bath system comprising a first bath containing a mixture of TEP, DMAC and water and thereafter a second bath containing pure water as a non-solvent to control the formation of membrane pore structures and enhance surface hydrophobicity whereby blended PVDF membranes are produced for application in MD processes.

2.    The method as claimed in claim 1, which includes dispersing pristine MWCNTs 0.2 wt % in a mixture of triethyl phosphate (TEP) and N, N-dimethylacetamide (DMAC) of 1:1 mass ratio thereby producing 81 wt % of a final dope solution.

3.    The method as claimed in claim 1 or claim 2, wherein the MWCNTs dispersion takes place by sonicating the solution for not less than 1 hour.

4.    The method as claimed in any one of the preceding claims, wherein a pore forming agent is added into the mixture followed by 15 wt % of PVDF.

5.    The method as claimed in claim 4, wherein the pore forming agent is ethylene glycol (EG).

6.    The method as claimed in claim 5, wherein the EG is used at a rate of 4 wt%.

7.    The method as claimed in any one of the preceding claims, wherein the mixture is mechanically stirred at 60 - 70 °C for up to 24 hours.

8.    The method as claimed in claim 7, wherein the dope solution is left to cool at room temperature for up to 24 hours.

9. The method as claimed in any one of claims 2 to 8, wherein the dope solution, once prepared, is cast onto thin membrane films on a glass plate using casting knife at a thickness from 100 $\mu$m to 600 $\mu$m.

10. The method as claimed in claim 9, wherein the thickness is 300 $\mu$m.

11. The method as claimed in claim 9 or claim 10, wherein the glass plate with a nascent membrane on top is first immersed in a coagulation bath containing 40 wt% water and 60 wt% of a 2:3 mass ratio of TEP and DMAC for a maximum of 30 seconds.

12. The method as claimed in claim 11 wherein precipitated membranes are soaked in deionized water for up to 24 hours to completely remove the solvents.

13. The method as claimed in claim 12, wherein the membranes are dried in air at room temperature ready for characterization and application.

14. Multi-walled carbon nanotube blended polyvinylidene fluoride (MWCNTs/PVDF) membranes for membrane distillation (MD) treatment of saline water when produced using the method as claimed in any one of the preceding claims, wherein the membranes have a contact angle between a surface of the membrane and water drops of 135° ± 1.1, a mean pore size of 1.16 $\mu$m ± 0.01 $\mu$m, a porosity 66.0 % ± 1.5 %, and a thickness of 60.0 $\mu$m ± 2.7 $\mu$m and a liquid entry pressure (LEP) of 250 kPa, wherein said contact angle, said mean pore size, said porosity and said LEP are measured as described in the specification.

**Patentansprüche**

1. Verfahren zur Herstellung von mehrwandigen Kohlenstoffnanoröhren-gemischten Polyvinylidenfluorid (MWCNTs/PVDF)-Membranen zur Membrandestillation (MD)-Behandlung von Salzwasser unter Verwendung von nichtlösungsmittelinduzierter Phasentrennung (NIPS - *non-solvent inducedphase separation*), wobei das Verfahren das Mischen von zwei Lösungsmitteln mit unterschiedlichen Löslichkeitsparametern umfasst, wobei es sich bei den Lösungsmitteln um Triethlyphosphat (TEP) und N,N-Dimethylacetamid (DMAC), gemischt in einem Massenverhältnis von 1 :1 handelt, sowie die Verwendung eines Doppelkoagulationsbadsystems, das ein erstes Bad umfasst, das eine Mischung von TEP, DMAC und Wasser enthält, sowie danach ein zweites Bad, das reines Wasser ohne Lösungsmittel zur Steuerung der Bildung von Membranporenstrukturen enthält und die Oberflächenhydrophobie verbessert, wodurch gemischte PVDF-Membranen für die Anwendung in MD-Verfahren hergestellt werden.

2. Verfahren gemäß Anspruch 1, das das Dispergieren von intakten MWCTNs *[Multi-Walled Carbon Nano Tubes]*, 0,2 Gew.-%, in einer Mischung von Triethylphosphat (TEP) und N,N-Dimethylacetamid (DMAC) in einem 1 :1 Massenverhältnis umfasst, wodurch 81 Gew.-% einer endgültigen Gießlösung hergestellt werden.

3. Verfahren gemäß Anspruch 1 oder Anspruch 2, wobei die MWCNT-Dispersion durch Beschallung der Lösung für nicht weniger als 1 Stunde erfolgt.

4. Verfahren gemäß einem der vorhergehenden Ansprüche, wobei ein porenbildendes Mittel in die Mischung gegeben wird, gefolgt von 15 Gew.-% PVDF.

5. Verfahren gemäß Anspruch 4, wobei das porenbildende Mittel Ethylenglykol (EG) ist.

6. Verfahren gemäß Anspruch 5, wobei das EG in einer Konzentration von 4 Gew.-% verwendet wird.

7. Verfahren gemäß einem der vorhergehenden Ansprüche, wobei das Gemisch bei 60 - 70°C für bis zu 24 Stunden mechanisch gerührt wird.

8. Verfahren gemäß Anspruch 7, wobei man die Gießlösung bei Raumtemperatur bis zu 24 Stunden abkühlen lässt.

9. Verfahren gemäß einem der vorhergehenden Ansprüche 2 bis 8, wobei die Gießlösung, sobald sie hergestellt ist, auf dünne Membranfilme auf einer Glasplatte unter Verwendung eines Gießmessers mit einer Dicke von 100 $\mu$m bis 600 $\mu$m gegossen wird.

**10.** Verfahren gemäß Anspruch 9, wobei die Dicke 300 μm beträgt.

**11.** Verfahren gemäß Anspruch 9 oder Anspruch 10, wobei die Glasplatte mit einer sich oben bildenden Membran zunächst für maximal 30 Sekunden in ein Koagulationsbad eingetaucht wird, das 40 Gew.-% Wasser und 60 Gew.-% TEP und DMAC in einem Massenverhältnis von 2 :3 enthält.

**12.** Verfahren gemäß Anspruch 11, wobei ausgefällte Membranen in entionisiertem Wasser bis zu 24 Stunden eingeweicht werden, um die Lösungsmittel vollständig zu entfernen.

**13.** Verfahren gemäß Anspruch 12, wobei die Membranen in Luft bei Raumtemperatur getrocknet werden, bereit für die Charakterisierung und Anwendung.

**14.** Mehrwandige Kohlenstoffnanoröhren-gemischte Polyvinylidenfluorid (MWCNTs/PVDF)-Membranen zur Membrandestillation (MD)-Behandlung von Salzwasser, wenn sie unter Verwendung des Verfahrens gemäß einem der vorhergehenden Ansprüche hergestellt werden, wobei die Membranen einen Kontaktwinkel zwischen einer Oberfläche der Membran und Wassertropfen von 135° ± 1,1, eine mittlere Porengröße von 1,16 μm ± 0,01 μm, eine Porosität von 66,0% ± 1,5%, und eine Dicke von 60,0 μm ± 2,7 μm, sowie einen Flüssigkeitseintrittsdruck (LEP - *Liquid Entry Pressure*) von 250 kPa aufweisen, wobei der Kontaktwinkel, die mittlere Porengröße, die Porosität und der LEP gemessen werden wie in der Beschreibung dargelegt.

## Revendications

**1.** Procédé de production de membranes de polyfluorure de vinylidène mélangées à des nanotubes de carbone à parois multiples (MWCNT/PVDF) pour le traitement par distillation membranaire (MD) d'eau salée à l'aide d'une séparation de phase induite par un non-solvant (NIPS - *acronyme anglais pour: non-solvent induced phase separation*), ledit procédé comprenant le mélange de deux solvants avec différents paramètres de solubilité, lesdits solvants étant du phosphate de triéthyle (TEP) et N,N-diméthlyacétamide (DMAC), mélangées dans un rapport massique de 1 :1, et l'utilisation d'un système de bain de coagulation double comprenant un premier bain contenant un mélange de TEP, de DMAC et de l'eau et ensuite un second bain contenant de l'eau pure en tant que non-solvant pour commander la formation de structures de pores de membrane et améliorer l'hydrophobicité de surface, moyennant quoi des membranes de PVDF mélangées sont produites pour une application dans des processus MD.

**2.** Procédé selon la revendication 1, qui comprend la dispersion de MWCNT *[acronyme anglais pour: Multi-Walled Carbon Nano Tubes]* intactes, 0,2% en poids, dans un mélange de phosphate de triéthyle (TEP) et de N,N-diméthlyacétamide (DMAC) de rapport massique de 1 :1, produisant ainsi 81% en poids d'une solution de dopage finale.

**3.** Procédé selon la revendication 1 ou la revendication 2, dans lequel la dispersion MWCNT a lieu par sonication de la solution pendant au moins 1 heure.

**4.** Procédé selon l'une quelconque des revendications précédentes, dans lequel un agent porogène est ajouté dans le mélange, suivi de 15% en poids de PVDF.

**5.** Procédé selon la revendication 4, dans lequel l'agent porogène est de l'éthylène glycol (EG).

**6.** Procédé selon la revendication 5, dans lequel l'EG est utilisé à une concentration de 4% en poids.

**7.** Procédé selon l'une quelconque des revendications précédentes, dans lequel le mélange est agité mécaniquement à 60 à 70 °C pendant jusqu'à 24 heures.

**8.** Procédé selon la revendication 7, dans lequel la solution de dopage est laissée refroidir à température ambiante pendant jusqu'à 24 heures.

**9.** Procédé selon l'une quelconque des revendications 2 à 8, dans lequel la solution de dopage, une fois préparée, est coulée sur des films de membrane mince sur une plaque de verre en utilisant un couteau de coulée à une épaisseur de 100 μm à 600 μm.

**10.** Procédé selon la revendication 9, dans lequel l'épaisseur est de 300 μm.

**11.** Procédé selon la revendication 9 ou la revendication 10, dans lequel la plaque de verre avec une membrane naissante sur le dessus est d'abord immergée dans un bain de coagulation contenant 40% en poids d'eau et 60% en poids de TEP et de DMAC d'un rapport massique de 2 :3 pendant un maximum de 30 secondes.

**12.** Procédé selon la revendication 11, dans lequel les membranes précipitées sont trempées dans de l'eau désionisée pendant jusqu'à 24 heures pour éliminer complètement les solvants.

**13.** Procédé selon la revendication 12, dans lequel les membranes sont séchées à l'air à température ambiante, prêtes à la caractérisation et à l'application.

**14.** Membranes de fluorure de polyvinylidène (MWCNT/PVDF) mélangées à des nanotubes de carbone à parois multiples pour le traitement par distillation membranaire (MD) d'eau salée, lorsqu'elles sont produites à l'aide du procédé selon l'une quelconque des revendications précédentes, les membranes ayant un angle de contact entre une surface de la membrane et des gouttes d'eau de 135° $\pm$ 1,1, une taille de pore moyenne de 1,16 $\mu$m $\pm$ 0,01 $\mu$m, une porosité de 66,0% $\pm$ 1,5%, et une épaisseur de 60,0 $\mu$m $\pm$ 2,7 $\mu$m, ainsi qu'une pression d'entrée de liquide (LEP - *acronyme anglais pour: liquid entry pressure*) de 250 kPa, ledit angle de contact, ladite taille de pore moyenne, ladite porosité et ladite LEP étant mesurés comme exposé dans la description.

Figure 1.    Difference between single-walled and multi-walled carbon nanotubes

Figure 2    SEM images for the invented membranes, surface (A) and cross section (B)

Figure 3    Schematic diagram of fabricated DCMD module

Figure 4    A picture of the DCMD membrane cell with polyester mesh spacers inside

Figure 5    Permeate flux (A) and salt rejections (B) of membranes at different temperature

**EP 3 860 747 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DUM6E et al.** *J. Memb. Sci.,* 2010, vol. 351, 36-43
- **GETHARD et al.** *ACS Appl. Mater. Interfaces,* 2011, vol. 3, 110-114
- **SILVA et al.** *Desalination,* 2015, vol. 357, 233-245
- **MAPUNDA et al.** *Physics and Chemistry of the Earth,* 2017, vol. 100, 135-142
- **GETHARD ; MITRA.** *Analyst,* 2011, vol. 136, 2643-8